# EUROPEAN PATENT SPECIFICATION

(11) **EP 2 620 268 B1**
(45) Date of publication and mention of the grant of the patent: **09.11.2016**
(21) Application number: 10857580.4
(22) Date of filing: 20.09.2010
(51) Int. Cl.: B29C 47/02, F16L 11/12, B29C 44/32, B29C 47/00, F16L 59/14, B29C 47/06, B29C 47/10, B29C 47/88, B29C 47/90, B29C 47/92, B29C 44/34, B29C 44/60, F16L 59/153, F16L 11/118, B29C 47/08

(54) **LINE FOR MANUFACTURING A HEAT-INSULATED FLEXIBLE PIPE**
PRODUKTIONSANLAGE FÜR WÄRMEISOLIERTEN SCHLAUCH
CHAÎNE DE PRODUCTION DE TUBE FLEXIBLE À ISOLATION THERMIQUE

(43) Date of publication of application: 31.07.2013
(73) Proprietor: Obschestvo S Ogranichennoy Otvetstvennostiyu "Smit-Yartsevo", Smolenskaya obl. 215800 (RU)
(72) Inventor: NARKEVICH, Sergey Leonidovich, Mogilev 212030 (BY); PAVLYUK, Evgeniy Sergeevich, Mogilev 212030 (BY)
(74) Representative: Sloboshanin, Sergej
(86) International application number: PCT/RU2010/000519
(87) International publication number: WO 2012/039638

(56) References cited:
- WO-A1-84/03066
- DE-A1- 3 216 463
- DE-A1- 19 507 110
- GB-A- 1 167 844
- GB-A- 1 482 661
- SU-A1- 1 141 000
- SU-A2- 1 362 645
- US-A- 4 108 703
- US-A- 4 345 363
- US-A1- 2001 043 991

## Description

The invention pertains to the field of building, in particular to manufacturing preliminarily insulated tubes applied in thermal energy, in building and laying heat networks as well as networks for cold and hot water supply.

Several devices for manufacturing thermally insulated tubes and lines realizing them are known from the prior art: DE 3126505, DE3724360, DE 10312700, DE 19629678, DE 3717020, DE 3724360, EP 0038974, DE 19629678, EP 01566587, EP 1612468, EP 2060843, EP 2138751, EP 1010933, FR 2578026, JP 58020424, JP 2002323194, JP 58020425, JP 58076235, SU 1449025, RU 2265517, RU 2289751, RU 2293247, RU 2320484, RU 2339869, RU 2355941, RU 2372551, RU 11585 U1, RU 2052706, RU 2280809, RU 96123112, RU 2003117471, RU 2004139112, US 4844762, US 4929409, WO 0035657, WO 0207948, WO 0231400, WO 0047387. These devices are rather complex, since they require special equipment and presuppose the manufacture of the thermally insulated tubes in a number of successive technical steps.

In particular, a line for manufacturing a thermally insulated tube is known according to European Patent application EP 0897788, B 29 C 44/30, published February 24, 1999. In a first step of the implementation of said method, the working tube and the insulating materials are supplied into a membrane-type sleeve, forming and structuring an insulation on the working tube in a corrugator. In a second step, the outer tube is extruded over the insulation formed.

The shortcoming of this line lies in the multiplicity of steps of the process, the use of expensive equipment, the requirement of labour and energy and the increased amount of material needed due to the use of additional materials (in this case the membrane-type sleeve).

The document DE 195 07 110 discloses a method of producing of heat insulating plastic tubes which method involves foaming of the outer insulating tube directly onto a plastic inner tube. The foamed outer tube simultaneously bonds to the inner tube and forms a closed outer skin. An apparatus realizing said method comprises an extruder for melt homogenisation with a blowing agent from a storage unit (8) and a crosshead die for applying the expandable melt around the inner tube. A multipart tool for moulding the foam comprises profiled elements moving synchronously with the inner tube (5) and mounted on endless belts (10).

As the prior art most pertinent in terms of all features, the technical solution was chosen which is described in international application WO 0035657, B 29 C 47/00, published June 22, 2000.

Application WO 0035657 describes a device for applying a thermal insulation on a long-dimensioned tube facilitating the manufacture of a thermally insulated tube by means of a one-step process without using centering elements for the working tube with regard to the outer tubular casing and without using a membrane-type sleeve.

The device for applying the thermal insulation comprises an extrusion head through which the long-dimensioned tube is guided, and extruders which simultaneously extrude the foaming thermally insulating material and the outer protective cover (tube).

The extruder of the extrusion head comprises a first opening, from which a compound for forming an outer protective tubular casing around the tube is extruded, and a second opening, from which the foaming thermally insulating material is extruded. The temperature of the compound for the protective tubular casing is approximately 300-400°F, while the foaming thermally insulating material must have room temperature. The foaming thermally insulating material and the compound for the protective tubular casing are inserted under pressure through corresponding dies. The dies are preferably cylindrical, which corresponds to the shape of the tube. After the simultaneous extrusion of the foaming thermally insulating material and the compound for the protective tubular casing, the conditions for a quick hardening of the material of the protective tubular casing are set.

For a quick hardening of the thermoplastic protective tubular casing, the product is cooled by a liquid coolant (mainly water). This can be carried out while the long-dimensioned tube with the foaming insulator and the protective tubular casing is moved through an area where the liquid coolant is sprayed. As an embodiment, the tube with the cover can be placed into a tub with liquid coolant, also a forced air flow can be used. If a thermoreactive protective cover is used, it is heated for quick hardening. Subsequently the foaming thermally insulating material is vulcanised. Usually several hours are necessary to vulcanise it. The vulcanisation process can be accelerated by heating.

Among the shortcomings of the most pertinent prior art there is the fact that it provides for the manufacture of an outer protective tubular casing without forming a relief in the shape of a helical surface, and also the difficulty of simultaneously maintaining a high temperature of the compound for the protective tubular casing and room temperature for the foaming thermally insulating material (this is required to prevent premature foaming).

### Disclosure of the invention

In the development of the invention the task of creating a line for a continuous one-step manufacturing of flexible, preliminarily insulated tubes with a high degree of thermal insulation presented itself.

The most pertinent prior art and the line according to the invention both comprise the following elements, arranged in series: an unwinding device supplying a working tube, a guiding device, an extrusion head, an extruder and a cooling tub.

The technical problem to be solved by the invention is to provide stability of the one-step continuous process of the production of flexible thermally insulated tubes, to increase the productivity and quality of the obtained articles, and to provide for the production of tubes with a helical (crimped) surface.

Due to the helical (crimped) shape of the surface the thermally insulated tube obtains additional flexibility and elasticity, which renders it possible to use the pipes manufactured from it without utilising immobile supports and compensating devices in trenchless installation, and also provides for a low level of temperature losses of the heat carrier.

The features which provide a solution to the problem underlying the invention, are the following:
- a rotating calibrating device providing for the forming of the helical shape of the outer protective tubular casing;
- the rotating calibrating device is made as a calibrator arranged in a hollow sleeve and co-operating with a vacuum pump of the tub creating a vacuum on the outside of the outer protective tubular casing to be formed, and the drive of the calibrator in the form of a reductor motor arranged on the tub and connected to the calibrator by a chain transmission or belt transmission, wherein the inner surface of the calibrator is provided with helical grooves to which the outer protective tubular casing to be formed, which moves in axial direction, is pressed due to the difference in pressures;
- the provision of the high-precision filling unit with a two- or multi-channel conditioning system arranged in a cavity of the extrusion head and comprising channel assemblies with channels (tubes) for feeding the foaming thermally insulating material from the device for supplying and mixing the foaming thermally insulating materials of the high-precision filling unit, and with coils with a coolant circulating therein, wherein the coils envelope the channels (tubes). Moreover each channel for feeding the foaming thermally insulating material in the two- or multi-channel conditioning system is formed as a tube from a material with low surface activity;
- the exit from the channels of the foaming thermally insulating material is arranged behind the rotating calibrating device after preliminary cooling of the outer protective tubular casing in the rotating calibrating device.

Another difference is that for an improvement of the removal of the dosed foaming material an injector with compressed air is guided to the exit from the two- or multi-channel conditioning system to the outlet place.

It is another feature of the line that in the extrusion head a positioning guide is arranged, facilitating a smooth coaxial movement of the working tube and preventing its sagging.

The line can be equipped with a cutting device for cutting the manufactured thermally insulated tube into regular sections, and with a winding device.

Another difference of the line lies also in that it is provided with a device for regulating and controlling the coaxiality of the position of the working tube with respect to the outer protective tubular casing in the form of a positioner having two degrees of freedom and carrying out the regulation and control of the position of the working tube through a layer of thermal insulation. The positioner is formed on the basis of four independent actuators moving in vertical and horizontal planes, a working sleeve with two rings on each of which four electromagnetic sensors are arranged, whose signal initiates commands of the control organs of the positioner to switch on the corresponding actuators changing the position of the sleeve in a horizontal or vertical plane, which causes a coaxial placement of the working tube with respect to the crimped casing through an insulating layer.

The technical problem is solved by the fact that the two- or multi-channel conditioning system combines several functions, namely:
- to facilitate the maintenance of a constant temperature of the reaction mixture (the components of the foaming filler);
- to facilitate the stability and controllability of the foaming process through the possibility to control the coolant circulation process, including its temperature;
- to facilitate the operability of the line in the event of a "clogging" of the component feeding channel with a switchover to a free channel for continuous production.

Moreover a system for controlling the position and coaxiality of the working tube with respect to the outer crimped tubular casing is provided in the line, wherein the control is carried out through an insulating layer by the positioning device with two degrees of freedom.

The line for manufacturing a flexible thermally insulated tube facilitates the stability of the foaming process and, as a result, the production of a high-quality product, wherein the outer tubular casing has a helical (crimped) surface, the forming of which is carried out by the rotating calibrating device, which renders it possible to improve the exploitative qualities of the finished product.

This surface shape of the protective tubular casing of polymer materials reduces the level of forces during the winding of the finished product on a drum, and also reduces the level of internal stress in the exploitation process of the finished flexible thermally insulated tube.

The analysis of the prior art showed that devices are known by which the forming of a helical surface on an outer protective tubular casing of polymeric materials is effected (RU 2293247 and EP 2060843). However, this shape of the outer protective tubular casing is obtained by more complicated means.

EP 2060843 pertains to a guide tube wherein an inner tube is arranged. The guide tube is adjusted axially, and its position is controlled by a device which tracks the centre position of the inner tube and sends corrective signals if necessary. A foil is supplied from a reel and is arranged around the inner tube concentrically with it, forming a sleeve with a glued or welded lateral seam. A foaming mixture based on polyurethane or polyethylene is fed into the formed sleeve. The tube enclosed by the foil is introduced into a corrugator, and corresponding recesses resembling half-waves in shape are formed by the geometry of the instrument. The tube with the half-wave shaped recesses on the surface exits the corrugator. By means of extrusion an outer casing of plastics is applied onto the tube, which fills the recesses in the shape of a half-wave. The outer casing firmly attaches to the foil in the extrusion process due to the high temperature. In accordance with the described process the crimped (half-wave shaped) surface is received by the corrugator which has a half-wave shaped or half-crimped working surface in its working instrument (moulds). As in the prior art EP 0897788 described above, wherein the shaping of the insulating materials is also carried out in a corrugator, the only difference is the shape of the surface of the working instrument, a helix (spiral) according to EP 2060843 or an annular shape according to EP 0897788.

Unlike in EP 2060843, in the line according to the invention first the outer helical surface is formed and cooled down, and subsequently the reaction materials are applied. The existing equipment and technical preconditions allow to do this simultaneously, the basic equipment used being practically the same as in the production lines for cylindrically shaped tubes known from the prior art.

RU 2293247 describes a line for manufacturing an insulated tube wherein a casing of punching/drawing steel is shaped in the form of a tube around an inner tube (or inner tubes), a plastic foil is applied in motion on said casing in a longitudinal direction, and its longitudinal edges are welded or glued, a foaming plastic compound is fed into the gap between the inner tube or tubes and the polymer foil or the punching/drawing steel casing, and a braided strap is wound helically on the plastic foil. The plastic foil is formed between the loops of the braided strap through the impact of the pressure of the foaming plastic in the form of an outward-pointing bulge, and finally the outer cover of thermoplastic is applied by extrusion, wherein the sections between the bulges are filled up in such a way that the outer cover obtains a helical wave-shape. According to RU 2293247, the foam is formed in the annular gap between the inner tube and the casing of punching/drawing steel through apertures in the casing of punching/drawing steel, and subsequently the obtained bulges are covered by extrusion, that is, first the foaming materials are supplied, and thereafter the outer cover is applied.

According to RU 2293247 and EP 2060843, the formation of the crimped relief on the tube is carried out in two steps: First the layer of thermal insulation is formed (crimped), and only thereafter is the outer layer applied. This principally distinguishes the line according to the invention from those known from the prior art. In the line according to the invention, the formation of the outer cover (the outer protective tubular casing) is carried out simultaneously with the forming of the thermally insulating layer, due to the rotating calibrating device.

The technical result obtained by the implementation of the invention lies in an increase of productivity, the facilitation of stability of the one-step continuous manufacturing of the flexible thermally insulated tubes, to increase the quality of the obtained products, and the obtainment of a helical (crimped) tube surface in a one-step process. Also, the line according to the invention facilitates a broadening of the range of the finished products manufactured thereon. For each type of flexible thermally insulated tube a standard exchangeable set of working instruments (dies, mandrels) is manufactured, the line facilitates the execution of a quick readjustment, and as a consequence an increase of the output per man-hour.

The construction of the line for manufacturing flexible thermally insulated tubes is explained by means of the following drawings.
- Fig. 1: shows a general view of the line according to the invention.
- Fig. 2: shows the line in a view from above.
- Fig. 3: shows the thermally insulated flexible tube.
- Fig. 4: shows an embodiment of the thermally insulated flexible tube with a working tube of polymer material.
- Fig. 5: shows an embodiment of the thermally insulated flexible tube with a working tube of metal.
- Fig. 6: shows the two- or multi-channel conditioning system arranged in the extrusion head.
- Fig. 7: shows a general view of the rotating calibrating device.
- Fig. 8: shows the rotating calibrating device in a left-side view.

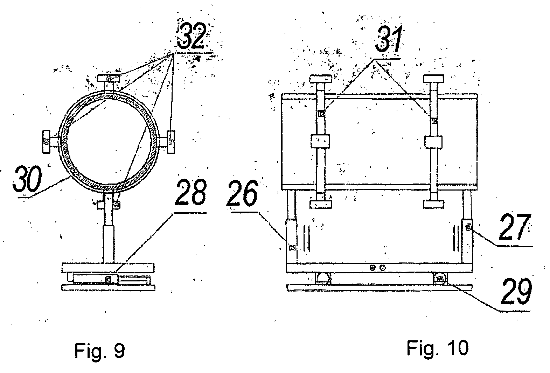

- Fig. 9: shows the positioner of the working tube in a general view.
- Fig. 10: shows the positioner of the working tube in a left-side view.

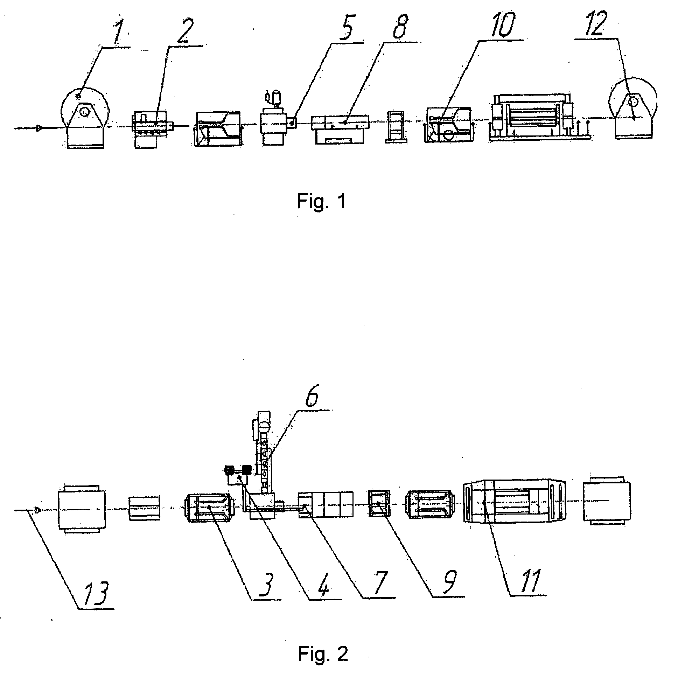

The line for manufacturing a thermally insulated flexible tube (Figs. 1 and 2) comprises the following elements arranged in series, which the working tube passes: An unwinding device 1 for supplying the working tube, a straightening device 2 with a pre-heating system, a guiding device 3, a high-precision filling unit 4, an extrusion head 5, an extruder 6, a rotating calibrating device 7, a cooling tub 8, a positioning device 9, a pulling device 10, a cutting device 11 and a winding device 12 for the finished products. The arrow indicates the supply of the working tube if it is supplied without using the unwinding device 1, directly from its production line.

The unwinding device 1 is a rotating spool arranged on movable support rollers of a metal base. For a smooth and continuous supply of the working tube the support rollers are provided with a braking system. Moreover the unwinding device can have another construction known from the prior art.

The straightening device 2 with the pre-heating system is implemented in the form of an assembly of rotating horizontal cylinders, and serves to balance and release the internal stresses of the working tube. The rectilinearity and accuracy of the shape of the cross-section are facilitated by exact mechanical or digital indicators of the position of the cylinders (means known from the prior art). The heating of the working tube can be effected by electric power or gas.

The guiding device 3 is provided for preventing a sideways deviation of the movements of the working tube, for dampening the vibrations and for a precise introduction through the extrusion head. It determines the trajectory and the character of the movement of the working tube, and consists of two identical pneumatic upper and lower caterpillars arranged in parallel above each other.

The high-precision filling unit 4 serves for the manufacturing and dosage of the system of foaming plastics. The equipment of the filling unit depends on the compound of the mixture and the given technology. Here the individual components are brought into a predetermined condition: heating the components up to a predetermined temperature, preliminary mixing the components and subsequently feeding them through the extrusion head 5 into the conditioning system.

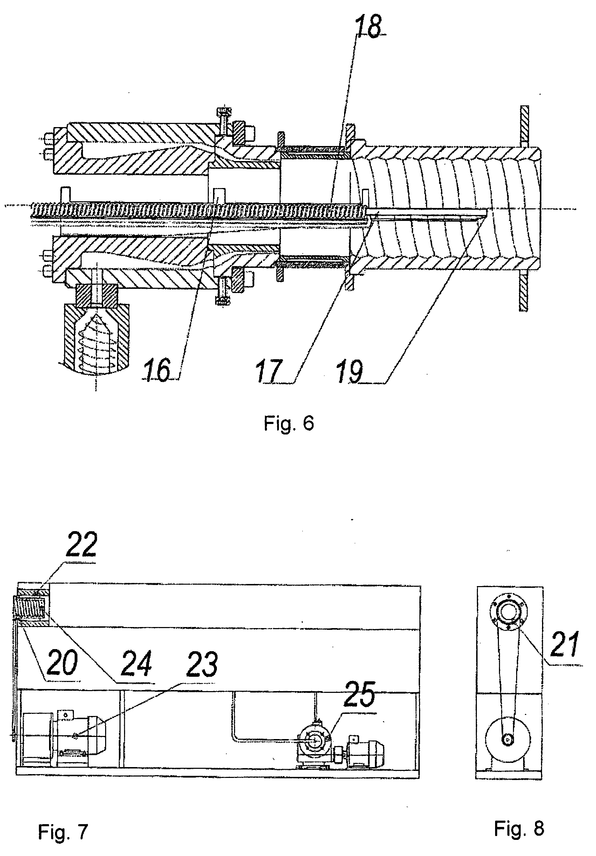

The extrusion head 5 is provided for the distribution of the polymer in the channel in such a way that the melt comes out at uniform speed. The extrusion head 5 is a profiling instrument giving the required shape to the polymer melt. In the given line a head with an angular flow of the melt is used, wherein the inner cavity of the extrusion head serves as the basis for the arrangement of the two- or multi-channel conditioning system (Fig. 6) with two (or more) channels for feeding the components of the foaming mixture.

The two- or multi-channel conditioning system arranged in the extrusion head consists of the following elements:
- a positioning guide 16 for precise guidance of the movement and prevention of a sagging of the working tube,
- a channel assembly (there can be two or more of them) which (or each of which) comprises a channel 17 for feeding the reaction material, made of a material with a low surface activity, arranged in a coil 18 along which the coolant is circulated. The coolant temperature is regulated depending on the temperature of the reaction material: it is cooled to prevent a premature foaming or heated for a timely reaction. An injector 19 with compressed air is directed to the channel exit point to improve the removal of the dosed material.

The multi-channel conditioning system fulfils the following functions:
1) It provides for the maintenance of a constant temperature of the passing reaction material, the stability and controllability of the foaming process by circulating the coolant regulating the temperature.
2) It facilitates the operability of the line in the event of a "clogging" of any of the channels for feeding the components of the foaming reaction material with the possibility of a switchover to a free channel for continuous production.
3) The construction of the multi-channel conditioning system is implemented in such a way that it fulfils the function of an additional precision guiding device for a coaxial supply of the working tube into the cavity of the outer protective tubular casing extruded and formed with a helical surface.
4) It provides for a feed of the foaming components to the foaming point.

The extruder 6 facilitates the distribution, homogenisation and feed of the polymer material to form the outer protective tubular casing through the extrusion head 5. The extruder 6 can be provided with a device for preliminary drying of the original raw material and with raw material chargers.

Under the influence of gravity the polymer material passes downward from a hopper into the working space of the extruder 6. Within the extruder the polymer material is fed into a closed space between a rotating screw and the immobile walls of the working cylinder. The effect of frictional forces causes a heating of the material, and by the rotation of the screw, a polymer melt of the required consistency is delivered to the extrusion head 5 at a predetermined pressure. The build-up of the outer protective tubular casing of polymer materials is implemented through the extrusion head 5 with an angular flow of the melt, further the outer protective tubular casing is formed in the rotating calibrating device 7 to form a helical (crimped) surface thereon, and it is thermally stabilised in the cooling tub.

The rotating calibrating device 7, arranged on the same base as the tub 8, is the principal part of the line, by which the principle of the one-step manufacturing of the flexible thermally insulated tube is executed by combining the function of a foaming and a cooling device in the rotating calibrating device. The rotating calibrating device 7 defines the required dimensions and the shape of the product, and consists of a calibrator 20 arranged in a sleeve 22 and attached to the end of the calibrator by a gear 21. The transmission of torque to the calibrator is carried out by chain or belt transmission from the gear over a reductor motor 23 arranged on the cooling tub.

Grooves 24 in the shape of a helical surface are formed on the inner surface of the calibrator 20. Due to a vacuum created by a vacuum pump 25, during formation of the outer protective tubular casing the semi-finished outer protective tubular casing is pressed to the walls of the calibrating device. The forming of the protective tubular casing occurs because the air within the semi-finished product is under atmospheric pressure while on the outside a vacuum is created, under the influence of which the semi-finished protective tubular casing is pressed to the walls of the calibrating device, forming a tube of predetermined size and configuration. By the axial rotation of the calibrating device around and by the lengthwise movement of the semi-finished product, the outer surface of the extruded protective tubular casing obtains a helical (crimped) shape. The calibrator 20 contacts the polymer melt, shapes it and cools it with the coolant taken from the cooling tub 8. When the extrudate exits the calibrator 20, it has already obtained sufficient strength to be drawn by the pulling device.

The cooling tub 8 consists of two parts and is a vacuum/cooling tub provided with a vacuum pump to create a vacuum in the calibrating device 7 and a circulation pump supplying the coolant (water) to the calibrating device 7 and the cooling part of the tub 8. The melt from which the outer protective tubular casing is formed has a high temperature (190-220°C) and does not have its shape due to its liquid state. To be given that shape, it is fed into the calibrating device which forms the required profile (the geometry of the tube).

To obtain the predetermined profile of the tube, several conditions must be met:
1) Creating a pressure difference between the outer and the inner parts of the calibrator to press the melt to its walls. Within the tube (from the inside) of the melt to be formed, there is an atmospheric pressure (due to communication with the outside atmosphere), while on the outside of the melt to be formed, a vacuum must be created. The vacuum is created by the vacuum pump.
2) Supplying the coolant (water) from the outside to the calibrator, in which the melt to be formed is arranged, to cool it and thus to preliminarily fix its shape. Thereafter the obtained outer protective tubular casing with the profile (shape) just shaped but not yet finally cooled is pulled through the cooling part of the tub, where it is finally cooled (thermally stabilised).

The calibrator is arranged on the same base as the vacuum/cooling tub, on which also the vacuum pump for creating the vacuum in the tub (to press the melt to the calibrator walls) and the circulation pump (pumps) to supply water to the calibrator for preliminary cooling are fixed. In the tub 8 (its cooling part) the final cooling of the helical surface of the outer protective tubular casing is carried out by spraying the coolant (for instance water) by the pumps through the injectors arranged along the entire length of the tub. In the tub there are connecting points to supply cold coolant and to discharge heated coolant. The coolant must have a temperature as low as the processed polymer allows. The stored heat can additionally be discharged by an outer refrigerator, or a multi-stage heat exchanger can be utilised.

The foaming reaction materials, which evenly fill the cavity between the tubular casing and the working tube, where the process of foam formation and stabilisation occurs, are fed into the thermally stabilised space between the tubes formed between the outer protective tubular casing and the working tube along the channels of the two- or multi-channel conditioning system of the high-precision filling unit.

By adhesion occurring at the border of the materials, a single integral flexible thermally insulated tube with a helical (crimped) surface and good thermally insulating properties is formed.

The positioner 9 is provided for the determination, regulation and control of the position of the working pipe with respect to the outer protective tubular casing with the helical surface while the process of stabilising the thermal insulation is carried out. It consists of two vertical independent actuators 26, 27 (upward/downward movement), two horizontal actuators 28, 29 (movement to the left/right), a working sleeve 30 with fixating rings 31, on each of which four electromagnetic sensors 32 are arranged, giving commands to the control organs of the positioner 9 (to the actuators), which in their turn correct the position of the working tube with respect to the crimped casing through a layer of not yet hardened insulation. The positioner 9 is a device with two degrees of freedom.

The pulling device 10 facilitating the movement of the tube along the line consists of two caterpillars, the upper pneumatic one of which compresses the tube, while the position of the lower one is regulated mechanically and is adjusted depending on the diameter of the thermally insulated tube to be manufactured. The distance between the upper and the lower caterpillar is maintained constant when a thermally insulated tube with the same diameter is produced. A chain with resin linings rotates in the caterpillars actuated by an electrical motor with stepless regulation of the rotational speed, and thus the pulling device facilitates a continuous disposal of the manufactured tube and its supply to the planetary-type cutting device 11, where the manufactured tubes are cut into regular sections.

The winding device 12 is provided with an electrical drive and a speed control from a central panel. It is provided for winding the tubes into coils with a diameter of up to 3.5 m and packing them.

In this line for manufacturing a thermally insulated flexible tube an integration of different control devices and mechanisms is provided, under the control of a single microprocessor system executing full automatic control of all elements of the extrusion line.

The prevention of any contact of the operating staff with the production components to the possible maximum, the mechanisation and automatisation of the extrusion processes, the supply of insulation, the simplification of the construction of the aggregates and the increase of their reliability solve the task of the invention, that is, to increase the output per man-hour.

The operation of the line for manufacturing a thermally insulated flexible tube is as follows.

The working tube 13 is supplied from the drum of the unwinding device 1 of the line or is manufactured simultaneously with the manufacturing process of the thermally insulated tube, and is supplied to the line without intermediate winding. Before the thermally insulating layer is applied on the working tube, it is preliminarily straightened and heated in the straightening device 2, which is required for an improvement of the adhesion between the materials, the working tube is positioned in the guiding device 3 and further moved through the extrusion head 5 with an angular flow of the melt of the polymer materials.

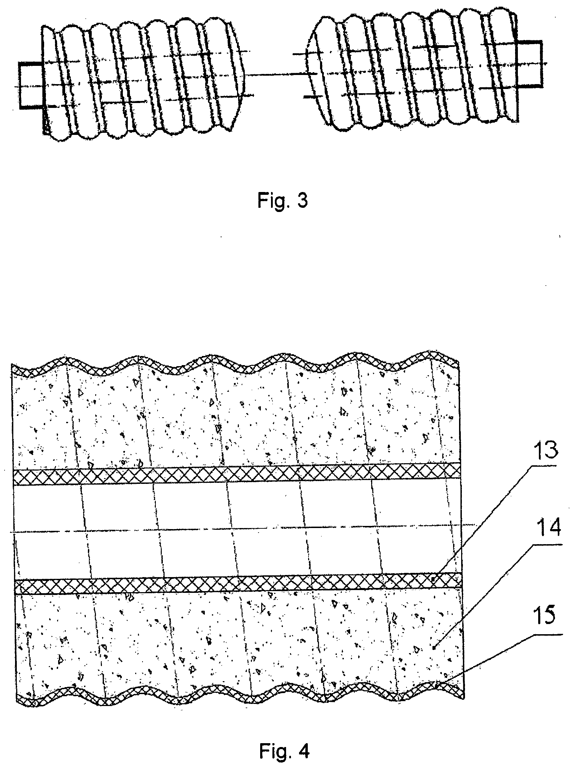

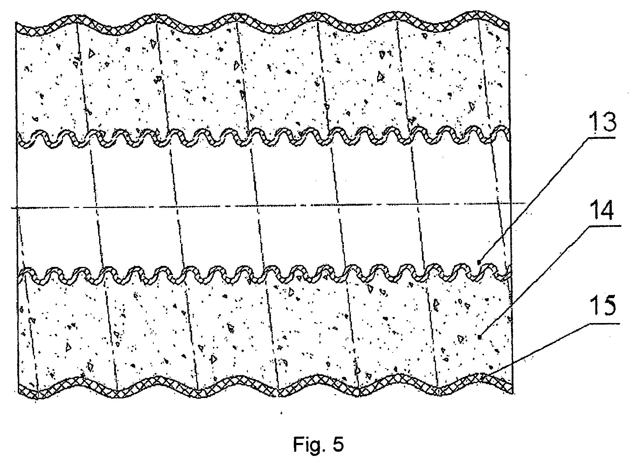

The working tube 13 can be manufactured from different strong flexible materials, for instance from polymers (Fig. 4) or metal (Fig. 5). There can be several working tubes arranged inside the outer tubular casing.

The outer protective tubular casing 15 of polymer materials is extruded coaxially with the working tube and is formed in the rotating calibrating device 7 to obtain its helical shape. As was shown above, this geometry of the semi-finished tube reduces internal stresses when the finished product is wound on the drum of the winding device 12, and also during exploitation of the finished thermally insulated flexible tube.

In the process of continuous supply of the working tube through the extrusion head 5 with lateral feed of the polymer materials, which extrudes the outer tubular casing, while the rotating calibrating device 7 gives the tubular casing its crimped surface. The calibrating device is equipped with injectors for feeding the coolant (water) from the cooling tub onto the surface of the obtained outer protective tubular casing for its thermal stabilisation and cooling.

Further, the foaming thermally insulated material, which evenly fills the inner cavity of the tubular casing 15, is fed into the thermally stabilised (cooled) cavity between the working (inner) tube and the helical (crimped) surface of the outer tubular casing from the high-precision filling unit 4 through the channel assemblies of the two- or multi-channel conditioning system, forming a thermally insulating layer 14.

The two- or multi-channel conditioning system consists of two or more channel assemblies 17 (corresponding to the number of channels) for feeding and mixing (injecting) the foaming thermally insulating materials and facilitates the maintenance of a constant temperature, the stability of the foaming process and its controllability. The maintenance of the required temperature by the conditioning system is implemented by the circulation of the cooling agent (for instance water) along the coils 18 enclosing the tubes forming the channels 17 of the device for feeding the foaming thermally insulating materials. The coil 18 cools the tube (channel 17) inside which the components of the foaming materials are arranged, and is simultaneously the guiding and supporting device for it. The tubes forming the channels 17 of the device for feeding and mixing the foaming thermally insulating materials are made of a material with low surface activity. The reaction materials, which are additionally mixed with the layers as they pass along the tubes, are fed along the channel 17.

The two- or multi-channel conditioning system is arranged in the cavity of the extrusion head, the coil 18 (the coils) cools the channel (channels) 17 of the channel assembly for feeding the foaming thermally insulating material, and also the space around the coil, which renders the temperature required to carry out the foaming process.

The feeding and mixing (injection) using two or more channels 17 (tubes) facilitates the operability of the line in the event of a "clogging" of the channel for feeding the foaming materials by switching over to a free channel. In the event of "clogging" of the channel, the feeding of the components of the foaming thermally insulating materials is transferred to another channel and facilitates the continuity of the technological process of manufacturing the thermally insulated tube.

The conditioning system with the apparatus for feeding and mixing the foaming thermally insulating materials is arranged in the cavity of the extrusion head 5. An additional supporting and centering device for the working tube can be arranged in the same cavity.

The product further obtained is cooled in the cooling tub 8 filled with coolant, for instance water.

The feeding of the foaming thermally insulating materials from the high-precision filling unit 4 is synchronised with the supply of the working tube and the extrusion process, which renders it possible to obtain a thermally insulating layer 14 with the same density and controllable distribution.

The control of the position and coaxiality of the working tube with respect to the outer crimped tubular casing is carried out through a layer of not yet hardened thermal insulation by the positioning device 9 with two degrees of freedom.

With the help of the pulling device 10, the finished flexible thermally insulated tube is supplied to the cutting device 11, in which the cutting into regular sections is carried out, and the finished product is wound on the drum of the winding device 12 and packed.

At the winding device the tubes are wound into coils and packed.

## Claims

1. Line for manufacturing a thermally insulated flexible tube comprising, arranged in series: an unwinding device (1) for supplying a working tube (13), a straightening device (2), a guiding device (3), a high-precision filling unit (4) with a device for feeding and mixing the foaming thermally insulating material, an extruder (6), an extrusion head (5) and a cooling tub (8), wherein the high-precision filling unit (4) with the device for feeding and mixing the foaming thermally insulating material is provided with a two- or multi-channel conditioning system arranged in the extrusion head (5) and containing two or more channel assemblies with channels (17) for feeding the foaming thermally insulating material and with coils (18) enveloping the channels (17), with a coolant circulating in the coils (18), the line being also provided with a rotating calibrating device (7) arranged before the cooling tub (8) and providing the forming of a helical shape of the outer protective tubular casing (15), the rotating calibrating device (7) being equipped with means for feeding the coolant from the cooling tub (8) on the surface of the obtained outer protective tubular casing (15), wherein the exit of the channels (17) for feeding the foaming thermally insulating material is situated behind the rotating calibrating device (7).

2. Line according to claim 1, wherein positioning guide (16) for a precise movement of the working tube (13) and the prevention of its sagging is arranged in the extrusion head (5).

3. Line according to claim 1, wherein in the two- or multi-channel conditioning system the channel (17) for feeding the foaming thermally insulating material is made as a tube from a material with low surface activity.

4. Line according to claim 1, wherein for an improvement of the removal of the dosed foaming thermally insulating material, an injector (19) with compressed air is supplied to the area where the foaming thermally insulating material exits the channel (17) or channels (17) of the two- or multi-channel conditioning system.

5. Line according to claim 1, wherein the rotating calibrating device (7) is made as a calibrator (20) with a drive, which is adapted to rotate in a hollow sleeve (22) and which is provided with helical grooves (24) on the inner surface, wherein the calibrating device (7) cooperates with a vacuum pump (25) of a vacuum/cooling tub (8) to create a depression on the outside of the outer protective tubular casing (15) to be formed, while the calibrator drive has the form of a reductor motor (23) attached to the tub (8) and connected to the calibrator (20) by chain transmission or belt transmission, wherein injectors for feeding the coolant from the cooling tub (8) on the outer surface of the outer protective tubular casing (15) are arranged on the calibrator (20).

6. Line according to claim 1, wherein said line is provided with a positioning device for controlling and correcting the position of the working tube (13) with respect to the outer protective tubular casing (15) in the form of a positioner (9) having two degrees of freedom and sensors (32) executing the control of the position of the working tube (13) with respect to the outer protective tubular casing (15) through a layer (14) of thermal insulation.

7. Line according to claim 6, wherein the positioner (9) is formed on the basis of four independent actuators (26, 27, 28, 29) determining a controlled movement in vertical (26, 27) and horizontal (28, 29) planes of a working sleeve (30), and also from two fixating rings (31) on each of which four electromagnetic sensors (32) are arranged, the exit signal of which is transmitted to the control organs of the positioner (9) which regulate the position of the working tube (13) with respect to the outer protective tubular casing (15) through a layer (14) of thermal insulation.

## Patentansprüche

1. Anlage zur Herstellung eines wärmeisolierten flexiblen Schlauchs, umfassend in Reihe angeordnet: eine Abspulvorrichtung (1) zur Bereitstellung eines Arbeitsschlauchs (13), eine Spannvorrichtung (2), eine Führungsvorrichtung (3), eine Hochpräzisionsfülleinheit (4) mit einer Vorrichtung zum Zuführen und Mischen des schäumenden wärmeisolierenden Materials, einen Extruder (6), einen Extrusionskopf (5) und eine Kühlwanne (8), **wobei** die Hochpräzisionsfülleinheit (4) mit der Vorrichtung zum Zuführen und Mischen des schäumenden wärmeisolierenden Materials mit einem Zwei- oder Mehrkanal-Konditionierungssystem versehen ist, das in dem Extrusionskopf (5) angeordnet ist und zwei oder mehr Kanalbaugruppen aufweist mit Kanälen (17) zum Zuführen des schäumenden Wärme isolierenden Materials und mit Windungen (18), die die Kanäle (17) umwickeln, mit einem in den Windungen (18) zirkulierenden Kühlmittel, wobei die Anlage ferner mit einer rotierenden Kalibrierungsvorrichtung (7) versehen ist, die vor der Kühlwanne (8) angeordnet ist und das Bilden einer spiralförmigen Form der äußeren röhrenförmigen Schutzverkleidung (15) gewährleistet, wobei die rotierende Kalibrierungsvorrichtung (7) mit Mitteln zum Weiterleiten des Kühlmittels von der Kühlwanne (8) auf die Oberfläche der erhaltenen äußeren röhrenförmigen Schutzverkleidung (15) ausgestattet ist, wobei der Ausgang der Kanäle (17) zum Zuführen des schäumenden wärmeisolierenden Materials hinter der rotierenden Kalibrierungsvorrichtung (7) angeordnet ist.

2. Anlage nach Anspruch 1, **wobei** eine Positionierführung (16) für eine genaue Bewegung des Arbeitsschlauchs (13) und das Verhindern seines Absenkens in dem Extrusionskopf (5) angeordnet ist.

3. Anlage nach Anspruch 1, **wobei** in dem Zwei- oder Mehrkanal-Konditionierungssystem der Kanal (17) zum Zuführen des schäumenden wärmeisolierenden Materials als ein Schlauch aus einem Material mit einer geringen Oberflächenaktivität ausgebildet ist.

4. Anlage nach Anspruch 1, **wobei** zu einer Verbesserung der Entfernung des dosierten schäumenden wärmeisolierenden Materials ein Injektor (19) mit Druckluft dem Bereich zur Verfügung gestellt ist, wo das schäumende wärmeisolierende Material aus dem Kanal (17) oder den Kanälen (17) des Zwei- oder Mehrkanal-Konditionierungssystems austritt.

5. Anlage nach Anspruch 1, **wobei** die rotierende Kalibrierungsvorrichtung (7) als ein Kalibrator (20) mit einem Antrieb ausgeführt ist, der zum Rotieren in einer Hülse (22) geeignet ist und der mit spiralförmigen Nuten (24) auf der inneren Oberfläche versehen ist, wobei die Kalibrierungsvorrichtung (7) mit einer Vakuumpumpe (25) einer Vakuum/Kühlwanne (8) zusammenarbeitet, um eine Vertiefung auf der Außenseite der zu formenden äußeren röhrenförmigen Schutzverkleidung (15) zu bilden, während der Kalibratorantrieb die Form eines Reduktionsmotors (23) hat, der an der Wanne (8) befestigt ist und mit dem Kalibrator (20) über eine Übertragungskette oder einen Übertragungsriemen verbunden ist, wobei die Injektoren zum Weiterleiten des Kühlmittels von der Kühlwanne (8) auf die äußere Oberfläche der äußeren röhrenförmigen Schutzverkleidung (15) auf dem Kalibrator (20) angeordnet sind.

6. Anlage nach Anspruch 1, **wobei** die Anlage versehen ist mit einer Positionierungsvorrichtung zum Steuern und Korrigieren der Position des Arbeitsschlauchs (13) im Bezug auf die äußere röhrenförmige Schutzverkleidung (15) in Form eines Stellungsreglers (9) mit zwei Freiheitsgraden und Sensoren (32), die die Steuerung der Position des Arbeitsschlauchs (13) im Bezug auf die äußere röhrenförmige Schutzverkleidung (15) durch eine Wärmeisolierungsschicht (14) ausführen.

7. Anlage nach Anspruch 6, **wobei** der Stellungsregler (9) auf der Grundlage von vier unabhängigen Stellgliedern (26, 27, 28, 29) ausgebildet ist, die eine kontrollierte Bewegung in vertikalen (26, 27) und horizontalen (28, 29) Ebenen einer Arbeitshülse (30) bestimmen, sowie aus zwei Feststellringen (31), auf denen jeweils vier elektromagnetische Sensoren (32) angeordnet sind, deren Ausgangssignale zu den Steuermitteln des Stellungsreglers (9) übermittelt werden, die die Position des Arbeitsschlauchs (13) bezüglich der äußeren röhrenförmigen Schutzverkleidung (15) durch eine Wärmeisolierungsschicht (14) regulieren.

## Revendications

1. Une chaîne de fabrication d'un tube souple à isolation thermique comprenant, agencés en série : un dispositif de déroulement (1) destiné à la fourniture d'un tube de travail (13), un dispositif de redressement (2), un dispositif de guidage (3), une unité de remplissage haute précision (4) avec un dispositif destiné à la fourniture et au mélange du matériau thermiquement isolant moussant, une extrudeuse (6), une tête d'extrusion (5) et un bac de refroidissement (8), dans lequel l'unité de remplissage haute précision (4) avec le dispositif destiné à la fourniture et au mélange du matériau thermiquement isolant moussant est munie d'un système de conditionnement à deux canaux ou à canaux multiples agencé dans la tête d'extrusion (5) et contenant deux ou plus ensembles de canaux avec des canaux (17) destinés à la fourniture du matériau thermiquement isolant moussant et avec des bobines (18) enveloppant les canaux (17), avec un liquide réfrigérant circulant dans les bobines (18), la chaîne étant également munie d'un dispositif de calibrage rotatif (7) agencé à l'avant du bac de refroidissement (8) et assurant la formation d'une forme hélicoïdale du boîtier tubulaire de protection extérieur (15), le dispositif de calibrage rotatif (7) étant équipé d'un moyen de fourniture du liquide réfrigérant à partir du bac de refroidissement (8) sur la surface du boîtier tubulaire de protection extérieur obtenu (15), dans lequel la sortie des canaux (17) destinés à la fourniture du matériau thermiquement isolant moussant se situe derrière le dispositif de calibrage rotatif (7).

2. La chaîne selon la revendication 1, dans lequel un guide de positionnement (16) pour un déplacement précis du tube de travail (13) et la prévention de son affaissement est agencé dans la tête d'extrusion (5).

3. La chaîne selon la revendication 1, dans lequel, dans le système de conditionnement à deux canaux ou à canaux multiples, le canal (17) destiné à la fourniture du matériau thermiquement isolant moussant est fabriqué sous la forme d'un tube à partir d'un matériau avec une faible activité de surface.

4. La chaîne selon la revendication 1, dans laquelle, pour une amélioration du retrait du matériau thermiquement isolant moussant dosé, un injecteur (19) d'air comprimé est fourni à la zone dans laquelle le matériau thermiquement isolant moussant quitte le canal (17) ou les canaux (17) du système de conditionnement à deux canaux ou à canaux multiples.

5. La chaîne selon la revendication 1, dans lequel le dispositif de calibrage rotatif (7) est fabriqué sous la forme d'un calibreur (20) avec un entraînement qui est adapté de façon à pivoter dans un manchon creux (22) et qui est muni de rainures hélicoïdales (24) sur la surface intérieure, le dispositif de calibrage (7) coopérant avec une pompe à vide (25) d'un bac de refroidissement/à vide (8) de façon à créer une dépression sur l'extérieur du boîtier tubulaire de protection extérieur (15) à former, tandis que l'entraînement de calibreur possède la forme d'un moteur réducteur (23) fixé au bac (8) et raccordé au calibreur (20) par une transmission à chaîne ou une transmission à courroie, des injecteurs destinés à la fourniture du liquide réfrigérant à partir du bac de refroidissement (8) sur la surface extérieure du boîtier tubulaire de protection extérieur (15) étant agencés sur le calibreur (20).

6. La chaîne selon la revendication 1, dans lequel ladite chaîne est munie d'un dispositif de positionnement destiné au contrôle et à la correction de la position du tube de travail (13) par rapport au boîtier tubulaire de protection extérieur (15) sous la forme d'un positionneur (9) possédant deux degrés de liberté et de capteurs (32) exécutant le contrôle de la position du tube de travail (13) par rapport au boîtier tubulaire de protection extérieur (15) par l'intermédiaire d'une couche (14) d'isolant thermique.

7. La chaîne selon la revendication 6, dans lequel le positionneur (9) est formé en fonction de quatre actionneurs indépendants (26, 27, 28, 29) déterminant un déplacement contrôlé dans le plan vertical (26, 27) et le plan horizontal (28, 29) d'un manchon de travail (30), et également à partir de deux bagues de fixation (31) sur chacune desquelles quatre capteurs électromagnétiques (32) sont agencés dont le signal de sortie est transmis aux organes de commande du positionneur (9) qui régulent la position du tube de travail (13) par rapport au boîtier tubulaire de protection extérieur (15) par l'intermédiaire d'une couche (14) d'isolant thermique.
